# EUROPEAN PATENT APPLICATION

(11) **EP 4 209 391 A1**
(43) Date of publication of application: **12.07.2023**
(21) Application number: 22150932.6
(22) Date of filing: 11.01.2022
(51) Int. Cl.: B60R 16/02, E05B 17/10, E05B 81/76

(54) **ELECTRONIC SWITCH SUBASSEMBLY TO BE ASSEMBLED TO AN INNER SIDE OF A VEHICLE DOOR**

(71) Applicant: U-Shin Italia S.p.A., 10044 Pianezza (IT)
(72) Inventor: SAVANT, Marco, 10044 PIANEZZA (IT); GUERIN, Anthony, 10044 PIANEZZA (IT); VIETTI, Andrea, 10044 PIANEZZA (IT)
(74) Representative: Germain Maureau

(57) **Abstract**

Electronic switch subassembly to be assembled to an inner side of a vehicle door, the switch subassembly (5) being configured to be activated by a user's touch so as to send a signal to an electronic latch to open the door, the switch subassembly (5) comprising:
- a switch contact area (522) extending across a transverse direction with respect to the path to be followed by the user's hand to reach the switch contact area when the subassembly is assembled to the vehicle door, and
- at least two switch elements (54a, 54b, 54c), each switch element comprising one or more switch(es), the switch elements being arranged at different positions along the transverse direction so that a user's touch on the switch contact area (522) activates at least one of the switches.

## Description

### Technical field

The present invention relates to an electronic switch subassembly to be assembled to an inner side of a vehicle door, to a bracket to be assembled to an inner side of a vehicle door, to an assembly for opening and/ or closing a vehicle door, and to a method for opening a vehicle door by means of the assembly.

### Background

Electronic assemblies for opening and/or closing a vehicle door generally comprise a handle, a bracket to which the handle is secured and electronic means configured to unlock the vehicle door and to activate a latch, such as an electronic latch, to open the vehicle door.

As a matter of fact, nowadays, door system are becoming more and more electrical. It means that the handle can have no more mechanical connection to the latch to release it and this function is realized by an electrical signal. To generate this electrical signal from the handle different solutions can be used as switches or sensors. The most common solution used involve a mechanical switch.

However, in many cases, the switch is difficult to activate because it is located in the handle and the user finds it hard to find it by touch.

### Summary of the invention

An object of the invention is to overcome this problem. An object of the invention is to provide for an opening through a switch that is reliable and easy to use.

The invention concerns an electronic switch subassembly to be assembled to an inner side of a vehicle door, the switch subassembly being configured to be activated by a user's touch so as to send a signal to an electronic latch to open the door, the switch subassembly comprising:
- a switch contact area extending across a transverse direction with respect to the path to be followed by the user's hand to reach the switch contact area when the subassembly is assembled to the vehicle door, and
- at least two switch elements, each switch element comprising one or more switch(es), the switch elements being arranged at different positions along the transverse direction so that a user's touch on the switch contact area activates at least one of the switches.

Due to the use of two switch elements arranged at different positions along the transverse direction with respect to the path to be followed by the user's hand to reach the switch contact area when the subassembly is assembled to the vehicle door, the user is sure to activate the switch by touch without having to probe several areas of the door.

The electronic switch subassembly can comprise the following features, considered alone or in any technically possible combination:
- each switch element comprises a first switch and a second switch, the switch subassembly being activated when:
   -- at least one of the first switches is activated and
   -- at least one of the second switches is activated;
- the first switches and the second switches are configured such that the output signal sent by of each of the output signals of the first switches when activated are is inverted with respect to the output signals sent by each of the second switches when activated;
- a first electrical subcircuit connecting the first switches together, and a second electrical subcircuit connecting the second switch elements together, the first electrical subcircuit being distinct from the second electrical subcircuit;
- at least three of the switch elements;
- a light source arranged to light the path to be followed by the user's hand to reach the switch contact area when the subassembly is assembled to the vehicle door;
- a paddle comprising the switch contact area, the paddle comprising for each switch element, a corresponding contact subcircuit allowing activation of the one or more switch(es) of the switch element by a user's touch on the switch contact area;
- the paddle comprises at least a part that is at least partially transparent to the light emitted by the light source, so as to light the path followed by the user's hand to reach the switch contact area when the subassembly is assembled to the vehicle door;
- a printed circuit board assembly comprising the at least two switch elements, for example comprising the first electrical subcircuit and the second electrical subcircuit and/or for example comprising the light source,
- the switch contact area is obtained by overmolding;
- a housing configured to cooperate with the paddle so as to define an inner space wherein the printed circuit board assembly is arranged;
- a contact zone between the housing and the paddle is sealed by laser welding to form a waterproof seal;
- electrical connection means for electrically connecting the printed circuit board assembly to the electrical latch, the housing having an opening through which the electrical connection means extend out of the inner space, the opening being sealed by potting to form a waterproof seal.

According to a further aspect, the invention concerns a bracket to be assembled to an inner side of a vehicle door, the bracket comprising:
- the electronic switch subassembly, and
- a body to which the subassembly is attached.

According to a further aspect, the invention concerns an assembly for opening and/or closing a vehicle door, the assembly comprising:
- a bracket according to the preceding claim,
- a cover member configured to be attached to the bracket, the cover member comprising:
   -- a frame part, and
   -- an inner wall part extending from the frame part so as to allow an access by the user's hand to the at least one electronic switch subassembly of the bracket.

According to yet another aspect, the invention concerns a method for opening a vehicle door by means of the assembly, comprising the activation of the at least one electronic switch subassembly by a user's touch so as to send a signal to an electronic latch to open the door, the activation of the at least one electronic switch subassembly comprising, in response to a user's touch on the switch contact area, a step of activation of at least one of the switches.

### Brief description of the drawings

[Fig. 1] Figure 1 shows an assembly for opening and/or closing a vehicle door comprising a bracket according to an example of embodiment of the invention.
[Fig. 2] Figure 2 shows a handle and a bracket of the assembly of Figure 1 before mounting on a vehicle door.
[Fig. 3] Figure 3 shows a cross-sectional view of the assembly of Figure 1 mounted on the vehicle door.
[Fig. 4A] Figure 4A shows the bracket of Figure 1 assembled to the vehicle door.
[Fig. 4B] Figure 4B shows the bracket of Figure 4A from an overhead view.
[Fig. 5A] Figure 5A shows the bracket of Figure 1.
[Fig. 5B] Figure 5B shows a detail of Figure 5A.
[Fig. 6A] Figure 6A is a rear view of the assembly of Figure 1 where the locking element is in an unlocked position.
[Fig. 6B] Figure 6B is a rear view of the assembly of Figure 6A where the locking element is in a locked position.

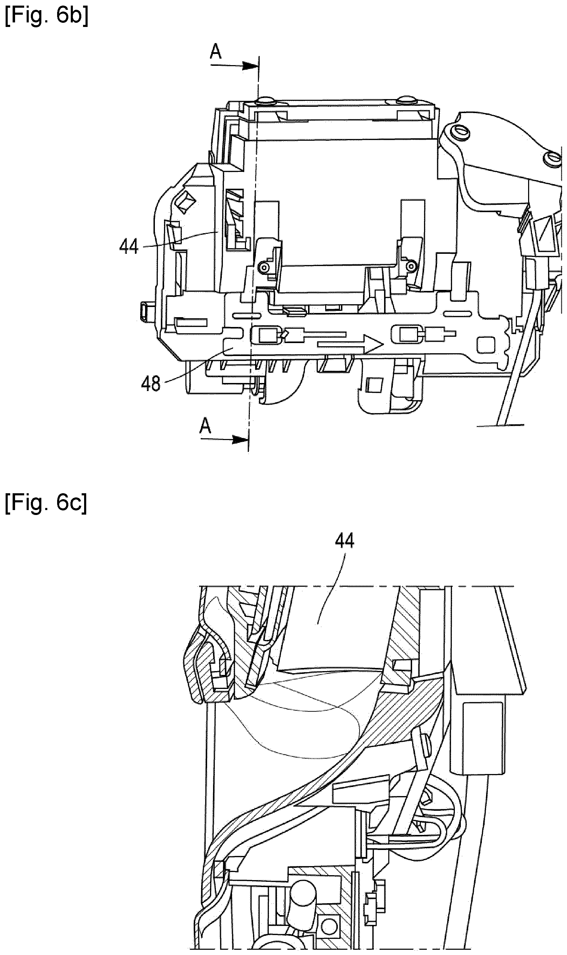

[Fig. 6B] Figure 6C is a cross-sectional view of the assembly of Figure 6B following the A-A cross-section plane.

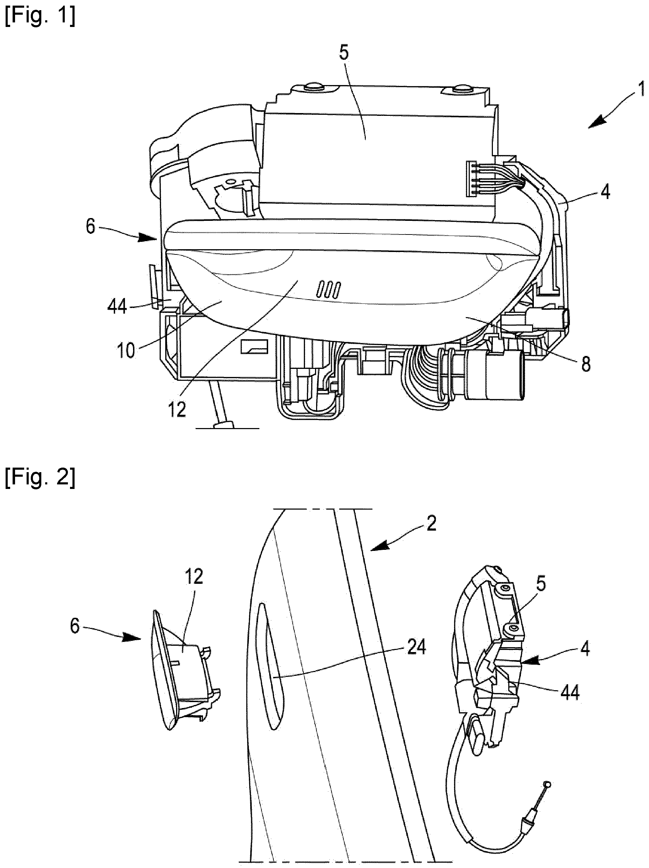

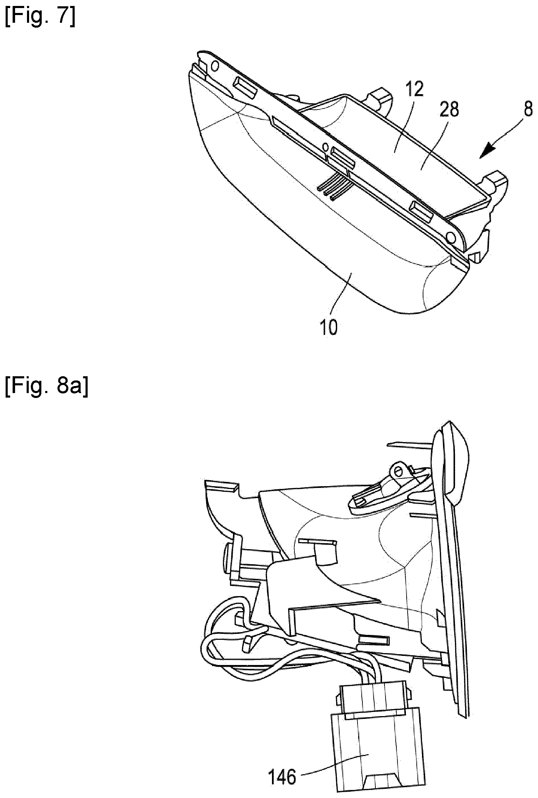

[Fig. 7] Figure 7 shows a cover member of the assembly of Figure 1.
[Fig. 8A] Figure 8A shows a sensor secured to the cover member of the assembly of Figure 1 viewed from the lateral side.

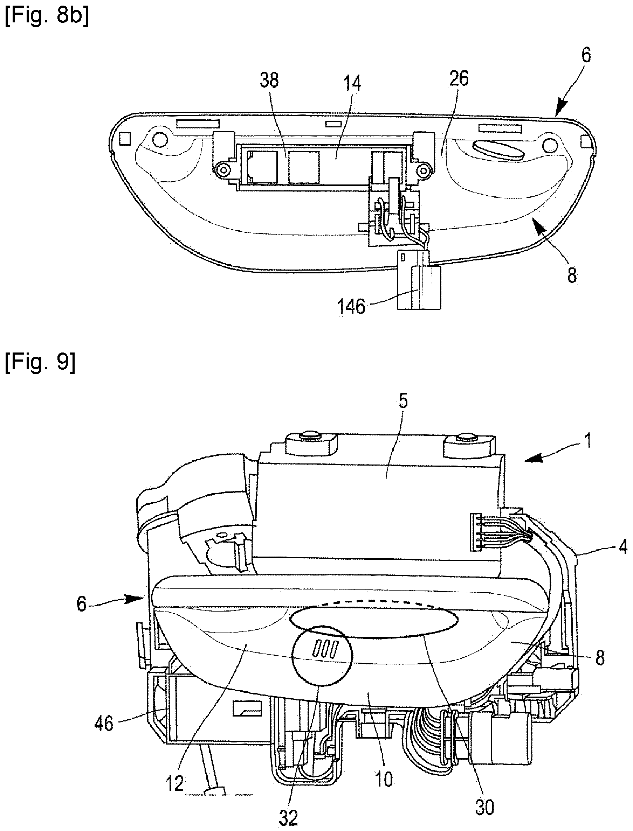

[Fig. 8B] Figure 8B shows a sensor secured to the cover member of the assembly of Figure 8A viewed from the rear side.
[Fig. 9] Figure 9 shows ranges of the assembly of Figure 1.

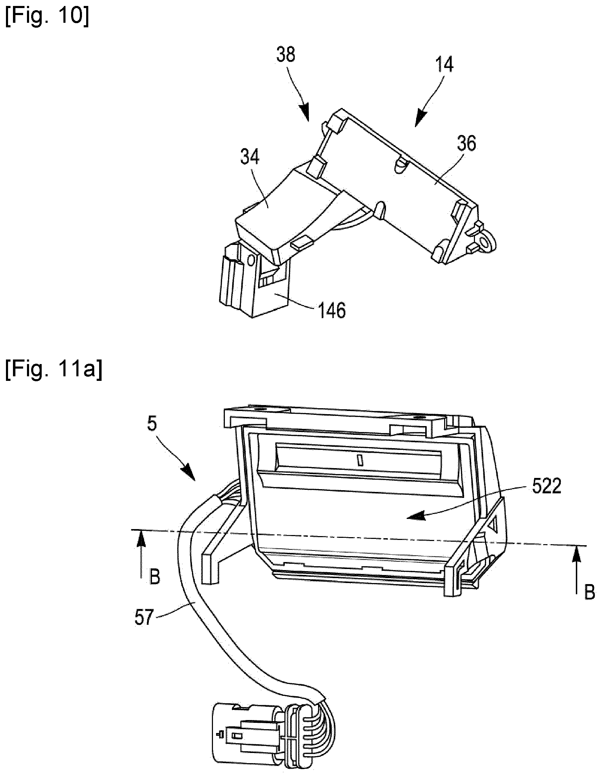

[Fig. 10] Figure 10 shows the sensor of the assembly of Figure 1.
[Fig. 11A] Figure 11A shows an electronic switch subassembly according to an example of embodiment of the invention.

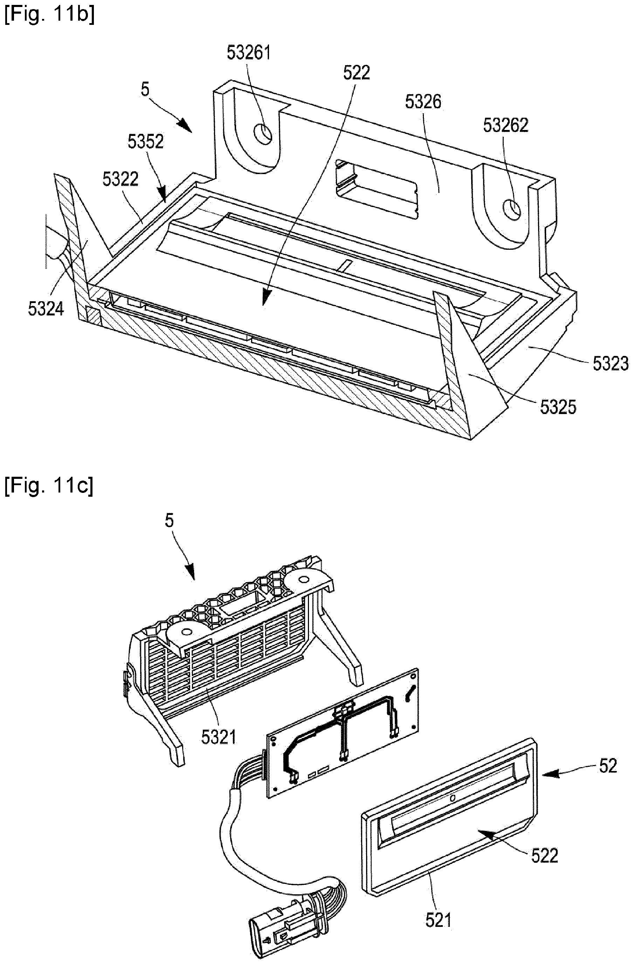

[Fig. 11B] Figure 11B is a view of the subassembly of Figure 11A, the subassembly being following the B-B cross-section plane.
[Fig. 11C] Figure 11C shows an exploded view of the electronic switch subassembly of Figure 11A.

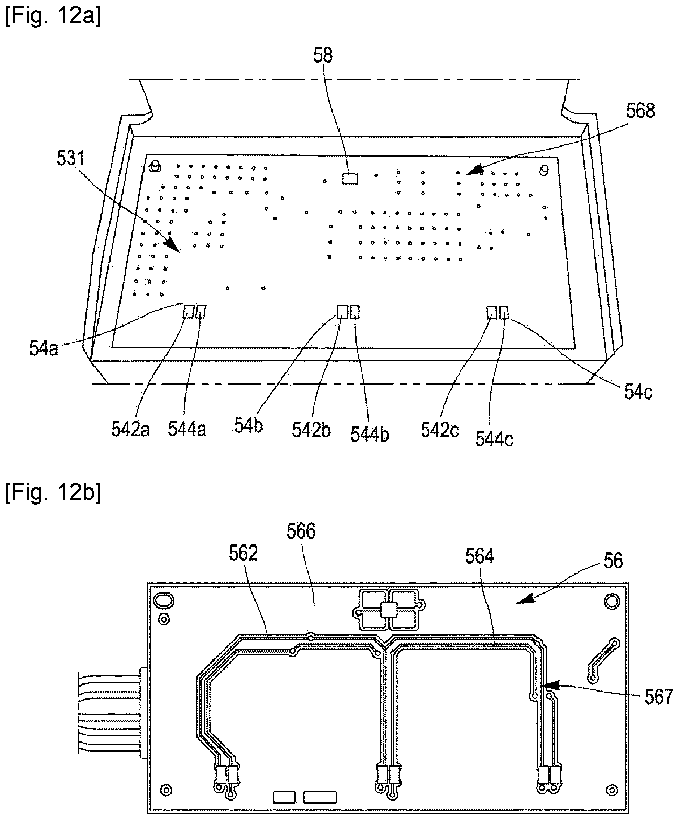

[Fig. 12A] Figure 12A shows a face of a printed circuit board assembly of the electronic switch subassembly of Figure 11A.
[Fig. 12B] Figure 12B shows another face of the printed circuit board assembly of Figure 12A.

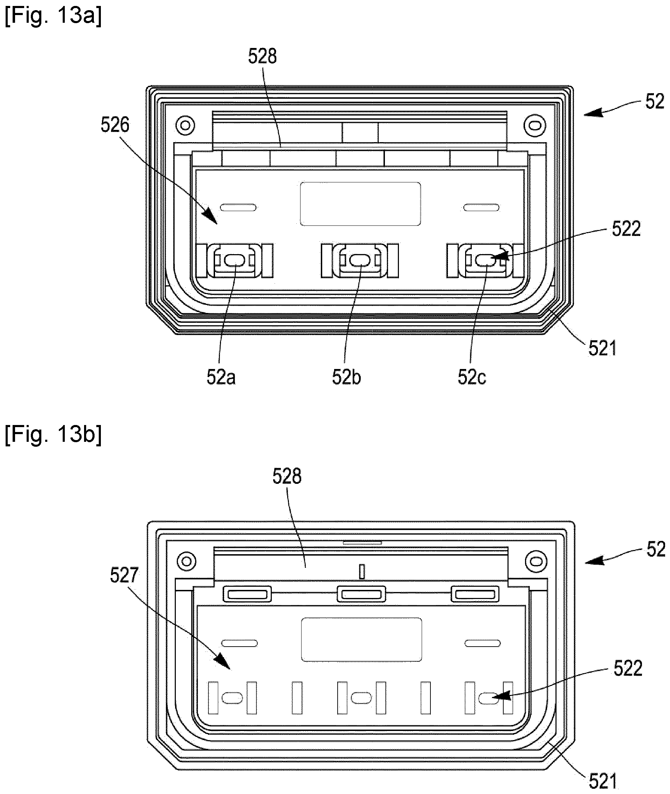

[Fig. 13A] Figure 13A shows a face of a paddle of the electronic switch subassembly of Figure 11A.
[Fig. 13B] Figure 13B shows another face of a paddle of Figure 13A.

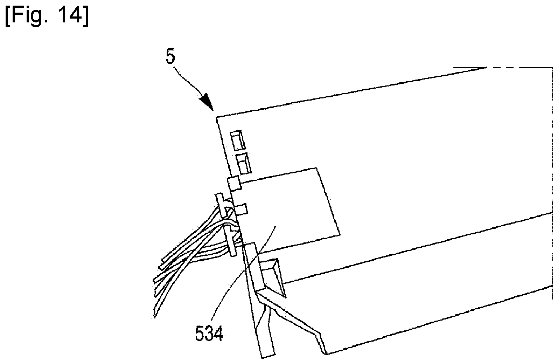

[Fig. 14] Figure 14 shows a face of a housing of the electronic switch subassembly of Figure 11A.

### Detailed description of embodiments

### Electronic switch subassembly

Figures 11A to 14 illustrate an electronic switch subassembly 5 to be assembled to a vehicle door, for example to a side of the vehicle door, for example to an inner side of the vehicle door 2. The switch subassembly 5 is for instance configured to be activated by a user's touch, for example so as to send a signal to an electronic latch to open the door. The door is for example a lateral door of the vehicle or the trunk door.

The switch subassembly 5 comprises a switch contact area 522 extending across a transverse direction, for instance with respect to the path to be followed by the user's hand to reach the switch contact area 522 when the subassembly 5 is assembled to the vehicle door 2.

The switch subassembly 5 comprises at least two switch elements 54a, 54b, for instance a first switch element 54a and a second switch element 54b. Each switch element comprises one or more switch(es) 542a, 542b, 544a, 544b. The switch elements 54a, 54b are arranged at different positions, for instance along the transverse direction, so that a user's touch on the switch contact area 522 activates at least one of the switches 542a, 542b, 544a, 544b.

Due to the use of several switch elements arranged at different positions along the transverse direction with respect to the path to be followed by the user's hand to reach the switch contact area when the subassembly is assembled to the vehicle door, the user is sure to activate the switch by touch without having to probe several areas of the door.

The switch subassembly 5 can comprise at least three such switch elements 54a, 54b, 54c, for instance the first switch element 54a, the second switch element 54b and a third switch element 54c. Each switch element can thus comprise one or more switch(es) 542a, 542b, 542c, 544a, 544b, 544c. The at least three switch elements 54a, 54b, 54c can be arranged at different positions, for instance along the transverse direction, so that a user's touch on the switch contact area 522 activates at least one of the at least three switches 542a, 542b, 542c, 544a, 544b, 544c.

Due to the use of three switch elements arranged at different positions along the transverse direction with respect to the path to be followed by the user's hand to reach the switch contact area when the subassembly is assembled to the vehicle door, the user is even more sure to activate the switch by touch without having to probe several areas of the door.

Having such three switch elements so located allows for covering the switch contact area to ensure that activation is obtained upon touching the switch contact area.

### Assembly

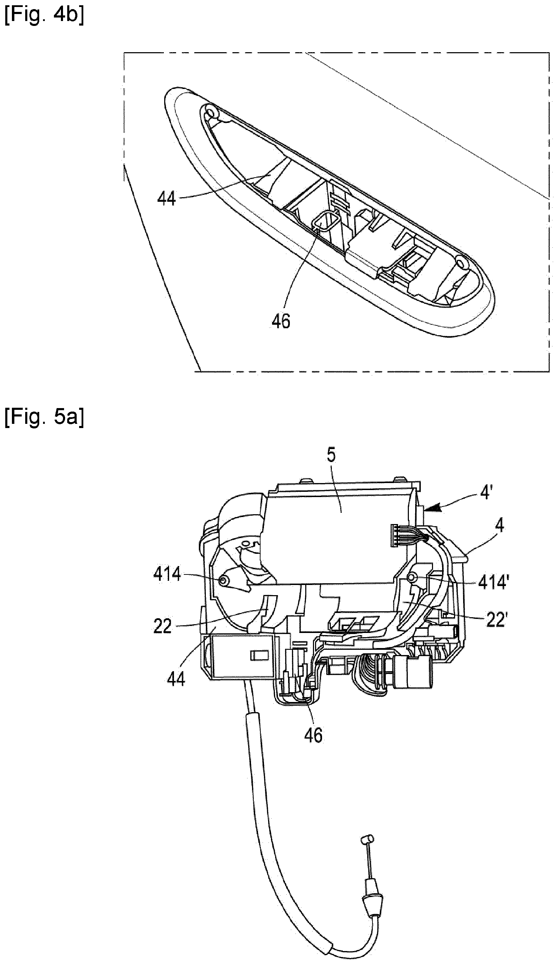

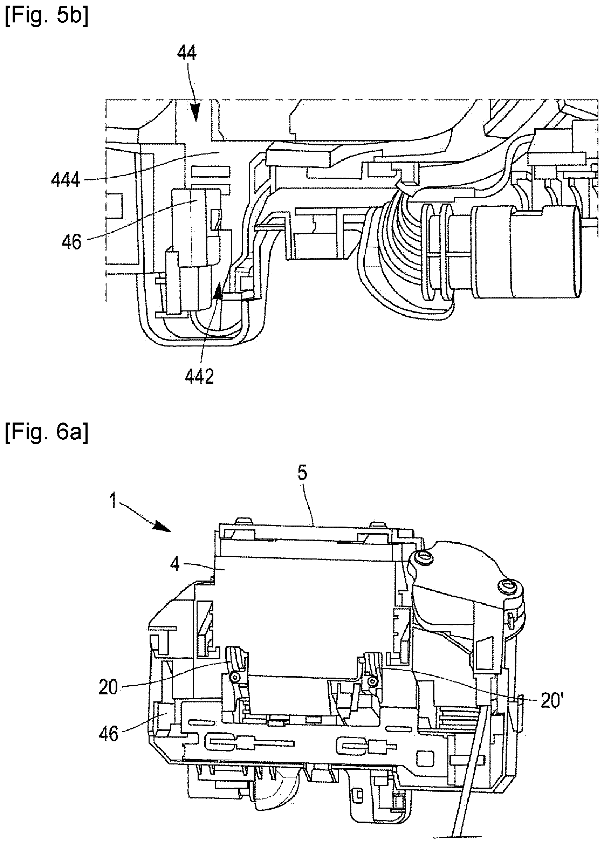

Figures 5A and 5B illustrate a bracket. The bracket 4 can be a bracket for the vehicle door, for example a bracket 4 configured to be assembled to the vehicle door, for example to be assembled to a side of the vehicle door, for example to an inner side of a vehicle door 2. The bracket 4 comprises the electronic switch subassembly 5, for example one or several such electronic switch assembly(ies) 5 to be activated by a user's touch so as to send a signal to an electronic latch (not shown) to open the vehicle door 2.

The bracket 4 further comprises a body 44. The subassembly 5 is attached to the body 44, for example secured to the body 44.

Figure 1 illustrates an assembly 1 for opening and/or closing a vehicle door 2 (figure 2).

The assembly 1 comprises the bracket 4, the bracket being for example configured to be assembled to an inner side of the door (figure 2).

The assembly 1 comprises a cover member 8 configured to be attached to the bracket 4, for example to be secured to the bracket 4. The assembly 1 can comprise a handle 6 comprising the cover member 8 (figures 6A, 6B and 6C).

The cover member 8 comprises a frame part 10, and an inner wall part 12 extending from the frame 10 so as to allow an access by the user's hand to the at least one electronic switch subassembly 5 of the bracket 4.

The assembly 1 can comprises at least one sensor 14 (figures 8 and 10) configured to detect a user's hand so as to allow a locking and/or an unlocking of the door when the user's hand is detected. The at least one sensor 14 comprises the first connector part 146.

### Bracket

The bracket 4 further comprises a second connector part 46. The second connector part 46 is configured to cooperate with a first connector part 146 of at least one sensor 14, so as to connect the at least one sensor 14 to the bracket 4. The at least one sensor 14 is for example such as described hereafter. The at least one sensor 14 can be configured to detect the user's hand so as to allow a locking and/or unlocking of the door when the user's hand is detected. The second connector part 46 is secured to the body 44 of the bracket 4.

It is therefore possible simplify the assembly of the bracket 4 and the sensor 14 together and to the vehicle door 2. As the second connector part 46 is secured to the body of the bracket 4, its position remains the same and is predetermined with respect to the rest of the bracket 4 and with respect to the vehicle door 2 once assembled. It is therefore easier to connect the second connector part 46 to the first connector part 146. For instance, the first connector part 146 can therefore be connected to the second connector part 46 only after the bracket 4 has been mounted on the vehicle door 2, and for instance before the sensor 14 is assembled to the vehicle door 2, contrary to the prior art where the two connector parts are connected together only after both the bracket and the cover member are mounted on the vehicle door, making the connection of the connector parts more difficult due to steric hindrance for an operator assembling the door, and resulting in an assembly taking more space due to the arrangements necessary for the operator to access the connector parts. The secured second connector part 46 further allow for a reduction of volume of the assembly due to the connection taking place before the assembly of the cover member 8.

The second connector part 46 can be attached to the body 44 of the bracket 4 so as to remain motionless with respect to the body 44 and/or to the electronic switch subassembly 5, for example to the rest of the bracket 4.

The bracket 4 is configured to be assembled to the inner side of the door 2 (figure 2).

By "assembled to the inner side" it is to be understood that the bracket 4 can be fixed or attached or assembled by any suitable means to the inner side of the door 2.

By "inner side of the door 2", it is understood for example the side of the door 2 destined to face the vehicle interior, by opposition to an outer side of the door 2 destined to be disposed towards the exterior environment.

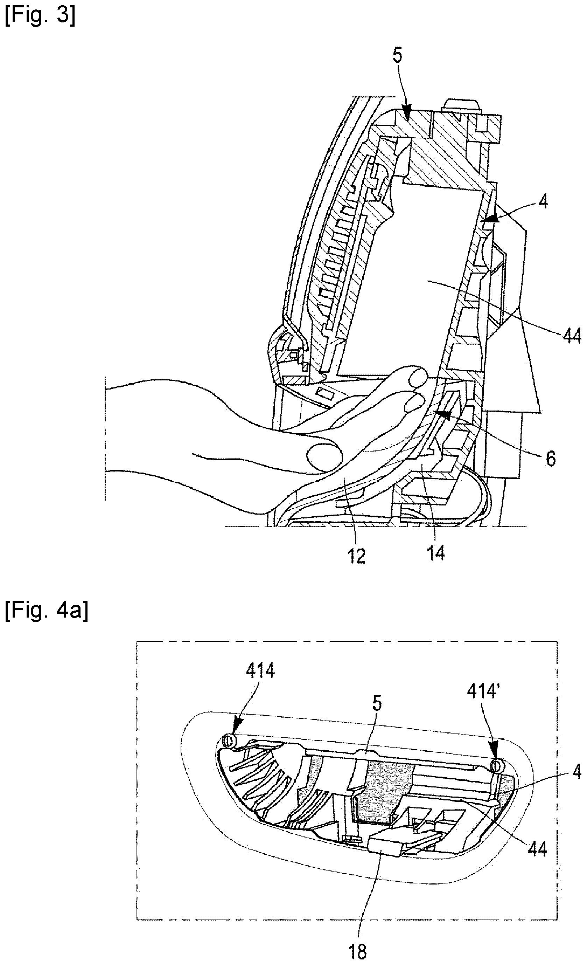

For example, as illustrated in figures 4A and 4B, the bracket 4 is fixed to the inner side of the door 2 by means of screws 414, 414'. For example, the bracket 4 is fixed to the inner side of the door 2 by means a first screw 414 and second screw 414'.

As illustrated in figures 4A and 4B, the bracket 4 is positioned against the inner side of the vehicle door 2.

As indicated hereabove, the bracket 4 comprises the at least one electronic switch subassembly 5 configured to be activated by a user's touch, for example, by mean of a user's finger touch.

When activated by the user's touch, the electronic switch subassembly 5 sends a signal to an electronic latch (not shown) so that the electronic latch opens the vehicle door 2.

As illustrated in figure 5, the at least one switch subassembly 5 is arranged on an upper part 4' of the bracket 4.

The at least one switch subassembly 5 is arranged on the upper part of the bracket 4.

The second connector part 46 is configured to cooperate with the first connector part 146 by clipping. Thus, it is easy to connect both parts without difficulty for an operator assembling the bracket 4, the cover member 8 and the sensor 14 on the vehicle door 2.

The second connector part 46 is for instance of a tubular shape, for instance tubular with a rectangular cross-section, for example a rectangular cross-section with rounded angles.

The bracket 4 is for example configured such that the second connector part 46 extends vertically once the vehicle door 2 is assembled to a vehicle. The vertical axis is for example the axis orthogonal to the ground when the vehicle is on a flat ground.

The second connector part 46 extends orthogonally to a longitudinal axis of the bracket 4. The longitudinal axis of the bracket can be defined as the axis defined by the longer dimension of the body 44 of the bracket, and/or the axis defined by the longer dimension of the door opening 24 as defined hereafter when the bracket is mounted on the door.

The second connector part 46 can be secured to the body 44 such that when the bracket 4 is mounted on the vehicle door 2, the second connector part 46 can be accessed through the door opening 24 as defined hereafter, for instance such that it can be connected to the first connector part 146 by an operator, for instance by means of inserting the first connector part 146 through the door opening 24. The second connector part 46 can be secured to the body 44 such that when the bracket is mounted on the vehicle door 2, the second connector part 46 extends within an inner space defined by the body 44 and the vehicle door 2 and leading to the door opening 24 as defined hereafter.

The body 44 can have a recess 442, the second connector part 46 extending within the recess 442. The body 44 can have a cavity 444. The recess 442 can lead to the cavity 444. The inner space can include the recess 442 and/or the cavity 444. The cavity 444 can be directly lead to the door opening 24 as defined hereafter. The cavity 444 is for example configured to receive a part of the cover member 8 and/or of the sensor 14, and/or for forming a part of the path allowing the user's hand towards the electronic switch subassembly 5 so as to activate the electronic switch subassembly 5, after passing through the frame part 10.

The second connector part 46 can be secured to a peripheral part of the body 44. The recess 442 can be located in a peripheral part of the body, for instance with respect to the cavity 444. This way, the second connector part 46 can be accessed easily during assembly, at a predetermined location, without blocking the way to the electronic switch subassembly 5 once the handle 6 is assembled.

The second connector part 46 can be secured to a lower part of the body 44, for example, with respect to the vertical axis defined hereabove. For this purpose is for example the bracket 4 can comprise a holder, for example an elongated holder, provided on the body 44, for example the holder engaging in a recess of the second connector part 46. Thus, the second connector part 46 can simply be pushed onto the elongated holder so as to be attached to the body 44 so as to remain motionless with respect to the body 44 and/or to the electronic switch subassembly 5. In particular, the holder and/or the second connector part 46 can have a stop so that the second connector part 46 is held in a defined position with respect to the body and/or to the electronic switch subassembly.

The recess 442 can be located in a lower part of the body 44, for example, with respect to the vertical axis defined hereabove, for example lower than the cavity 444. This way, the second connector part 44 can be seen easily by an operator whose eyes are looking to the door opening from above, simplifying the moves of the operator leading connection with the first connector part 146. The operator's view is for instance illustrated by Figure 4B.

The second connector part 46 can be secured to the body 44 by clipping and/or screws and/or welding.

The body 44 can be integral.

### Cover member

The cover member 8 of the handle 6 is configured be secured to the bracket 4.

To this end, the bracket 4 and the cover member 8 comprises complementary fastening means which cooperate with each other so that the cover member can be secured to the bracket.

For example, the bracket 4 comprises clipping means 18 (figure 4A) and the cover member 8 comprises at least one housing (not visible) configured to receive the clipping means 18 of the bracket 4. The bracket 4 can comprise at least one aperture, the assembly being configured such that the clipping means 18 can be inserted through at least one aperture of the bracket 4, for example so as to reach the at least one housing.

As illustrated in figures 6A, 6B and 6C the cover member 8 comprises two clipping means 20, 20' and the bracket 4 comprises two corresponding recesses 22, 22' (figure 5A) each configured to receive one of the clipping means 20, 20' of the cover member 8.

For instance, the assembly is configured such that the cover member can be locked in position to the bracket 4. To this extent, the bracket 4 can comprise a locking element 48. The locking element 48 can be configured such that a sliding of the locking element 48 with respect to a body of the bracket allows for locking the cover member on the bracket. The locking can result from the locking element 48 being positioned at least partially between the clipped clipping means and the aperture.

As illustrated in figure 1, the cover member 8 is configured to be assembled to the external side of the vehicle door 2, opposite to the inner side of the door 2.

To this end, the vehicle door 2 comprises an opening 24 (figure 2) so that the cover member 8 can be assembled to the external side of the door and secured to the bracket 4.

As illustrated in figure 7, the frame part 10 of the cover member 8 is sized so that a user's hand can passes through the frame 10 (figure 3).

The frame part 10 is configured to be positioned against the external side of the vehicle door.

The inner wall part 12 of the cover member 8 extends from the frame part 10. The inner wall part 12 extends from the frame part 10 so as to allow access by the user's hand the at least one electronic switch subassembly 5 of the bracket 4 when the handle 6 is secured to the bracket 4 (figure 3). The inner wall part can form a guide to the at least one electronic switch subassembly 5.

To this end, the inner wall part 12 can be tilted with respect to the frame part 8. This configuration permits to guide the user's hand toward the at least one electronic switch subassembly 5 arranged on the upper part of the bracket 4 (figure 3).

By "upper", respectively "lower", it is for example understood with respect to a vertical axis, for example the axis orthogonal to the ground when the vehicle is on a flat ground.

For example, the inner wall part is curved (figure 7).

The frame part 10 and the tilted inner wall part may form a bowl shape element. For instance, the frame part 10 and the tilted inner wall part may form a handle 6 of the bowl type, for instance a bowl-shaped handle 6.

The frame part 10 and the inner wall part 12 can be made integrally.

Optionally, the vehicle door 2 can be manually and mechanically opened, by means of the mechanical lockset.

To this end, the handle 6 comprises a gripping means configured to be graspable by the user's hand to manually open the vehicle door.

For example, the gripping means is arranged on the frame part 10 of the cover member 8.

For example, the gripping means is a strip such as a chrome strip.

### Sensor

The at least one sensor 14 can be positioned such that, when the user's hand is inserted in the cover member 8 in order to reach the at least one electronic switch subassembly 5, the user's hand is detected by the sensor 14 before the user's hand reach the at least one electronic switch subassembly 5 so as to allow the unlocking of the door 2 (figure 3).

The location of the detection range of the at least one sensor 14 permits to anticipate by a few seconds the unlocking of the vehicle door 2 before the electronic switch subassembly 5 is reached by the user's hand to open the vehicle door 2. This permits to avoid wall effect.

The assembly 1 comprises the at least one sensor 14 (figures 8A, 8B and 9) configured to detect a user's hand so as to allow a locking and/or an unlocking of the door 2 when the user's hand is detected. The assembly 1 can comprise one or several such sensor(s) 14.

The sensor 14 is positioned such that, when the user's hand is inserted in the cover member 8 in order to reach the at least one electronic switch subassembly 5, the user's hand is detected by the sensor 14 before the user's hand reach the at least one electronic switch subassembly 5 so as to allow the unlocking of the door 2 (figure 3).

As illustrated in figure 3, the arrangement of the sensor 14 permits to anticipate by a few second the unlocking of the vehicle door before the user's hand reach the electronic switch subassembly 5 to open the vehicle door.

For example, once the user's hand is detected by the sensor 14 to unlock the vehicle door 2, an unlocking process of the vehicle starts.

The unlocking process comprises a step wherein the vehicle detects if the key of the vehicle (arranged in a pocket of the user for example) is near the vehicle to validate the unlocking of the vehicle door 2, for instance in a certain proximity, for instance at a certain distance of the vehicle.

The detection of the key permits to validate the unlocking of the vehicle door 2. The detection of the key can be done by means of antennas of the vehicle for example. The vehicle door 2 is then unlocked.

Thus when the user's hand reach the switch subassembly 5 of the bracket 4 so as to send a signal to an electronic latch to open the door 2, the vehicle door 2 is already unlocked.

This permits to avoid wall effect that is to say that opening of the vehicle door happens with a certain delay after the input of the user as the same input commands for unlocking and opening, which have to be performed one after the other.

As illustrated in figures 8A and 8B, the sensor 14 is arranged on the cover member 8, for example on a side 26 of the cover member 8, opposite to a side 28 of the cover member 8 intended to face the user's hand when the user's hand is inserted in the cover member 8 in order to reach the at least one electronic switch subassembly 5, for instance on a rear side of the cover member 8. The sensor 14 is therefore mounted on the vehicle door 2 and on the bracket 4 together with the cover member 8 to which the sensor 14 is preassembled. Therefore, after connection of the first connector part 146 and second connector part 46, mechanical assembly is permitted through mechanical assembly of the cover member 8 to the vehicle door 2 and/or to the bracket 4.

For example, the sensor 14 is arranged against the inner wall part 12 of the cover member 8.

For example, the sensor 14 is a capacitive sensor.

As illustrated in figure 9, the sensor 14 has an unlocking sensing range 30 extending at least between the frame part 10 and the at least one electronic switch subassembly 5, for instance between the frame part 10 and the at least one electronic switch subassembly 5.

For example, the unlocking sensing range 30 extends substantially over a large area between the frame part 10 and the at least one electronic switch subassembly 5 so that the user's hand can be detected regardless of the position of the user's hand when the user's hand accesses the cover member 8. For example, the unlocking sensing range 30 extends substantially over the width of the path defined by the inner wall part 12.

The sensor 14 has a locking sensing range 32 extending upstream the unlocking sensing range 30 along the course followed by the user's hand so as to reach the at least one electronic switch subassembly 5.

Upstream, respectively downstream, means for example with respect to a sense going from the outside of the handle towards the electronic switch subassembly 5, for instance with respect to the sense going from the frame part to the electronic switch subassembly 5, for instance with respect to the movement of the user's hand reaching for the electronic switch subassembly 5.

The locking sensing range 32 extends between the frame part 10 and the unlocking sensing range 30.

The locking sensing range 32 extends substantially over an area smaller than the unlocking sensing range 30. The locking sensing range 32 extends at a central part of the inner wall part 12.

For example, the unlocking sensing range 30 extends over an area equal to at least twice the area of the locking sensing range 32.

The locking sensing range 32 is arranged so that once the vehicle door 2 has been closed, the locking sensing range 32 is quickly accessible by the user's hand so as to lock the vehicle door 2.

As illustrated in figure 10, the sensor 14 comprises a locking detection part 34 configured to detect the user's hand so as to allow the unlocking of the door 2 and an unlocking detection part 36 configured to detected the user's hand so as to allow the unlocking of the door 2.

The locking detection part 34 extends by a non-zero angle from the unlocking detection part 36.

For example, the unlocking detection part 36 extends over an area equal to at least twice the area of the locking detection part 34.

The sensor 14 is a standalone sensor. For example, the sensor 14 is arranged in a casing 38 fixed to the cover member 8.

The first connector part 146 can be of a complementary shape with respect to the second connector part 46.

The first connector part 146 and the second connector part 46 are configured electrically connect the bracket 4 and the at least one sensor 14, for instance so as to provide power to the sensor 14 and/or so as to allow the sensor 14 to transmit data.

The first connector part 146 can be configured so as to be movable with respect to a body of the sensor 14, for example with respect to the unlocking detection part 36 and/or to the locking detection part 34. The first connector part 146 can be connected to a body of the sensor 14, for example with respect to the unlocking detection part 36 and/or to the locking detection part 34, through at least one connecting element, for instance several connecting elements, for instance an electrical and/or mechanical connecting element, connecting the first connector part 146 to the body of the sensor 14, so that the first connector part 146 remains connected to the rest of the sensor 14 even when the first connector part 146 is moved such that the second connector part 46 can be accessed. The connecting element does not prevent the cover element from being moved freely in translations and rotations with respect to the another part. The connecting element can comprise or form one or more electric wire(s).

### Switch elements

The switch subassembly is for example activated when at least two of the switches 542a, 542b, 542c, 544a, 544b, 544c are activated. This reduces the risks for an incorrect activation.

Each switch element 54a, 54b, 54c comprises a first switch 542a, 542b, 542c and a second switch 544a, 544b, 544c. The switch subassembly is activated when, for instance only when at least one of the first switches 542a, 542b, 542c is activated and at least one of the second switches 544a, 544b, 544c is activated. This allows for increased reliability of the activation in that it limits unwanted activations or incorrect activations, for instance when one switch 54a, 54b, 54c is activated by mistake or when one of the first switches 542a, 542b, 542c or related circuit is damaged and activates by mistake while the second switches 544a, 544b, 544c and related circuit are functional, or one of the second switches 544a, 544b, 544c or related circuit is damaged and activates by mistake while the first switches 542a, 542b, 542c and related circuit are functional,

The first switch element 54a comprises the first first switch 542a and the first second switch 544a. The second switch element 54b comprises the second first switch 542b and the second second switch 544b. For example, the third switch element 54c comprises the third first switch 542c and the third second switch 544c. For example, activation can result from the first first switch 542a and the first second switch 544a being activated, but activation can also result from the first first switch 542a and the third second switch 544c being activated.

The first switches 542a, 542b, 542c and the second switches 544a, 544b, 544c can be configured such that the output signal sent by of each of the output signals of the first switches 542a, 542b, 542c when activated is inverted with respect to the output signal sent by each of the second switches 544a, 544b, 544c when activated. The first switches 542a, 542b, 542c and the second switches 544a, 544b, 544c can be configured such that the output signal sent by of each of the output signals of the first switches 542a, 542b, 542c when not activated is inverted with respect to the output signal sent by each of the second switches 544a, 544b, 544c when not activated. Therefore, the output signals of each of the first switches 542a, 542b, 542c are inverted to the output signals of the second switches 544a, 544b, 544c. This further reduces the risks of false activation of the subassembly as two different output signals are required. For example, each of the first switches 542a, 542b, 542c sends an output signal, indicating an open signal by default, the corresponding circuit part being open, and only if the output signal indicates a closed state, the corresponding circuit part being closed, by instance so as to let the current pass or so as to form a short-circuit, the same first switch 542a, 542b, 542c is activated. For example, each of the second switches 544a, 544b, 544c sends an output signal, indicating a closed state by default, the corresponding circuit part being closed by default, by instance so as to let the current pass or so as to form a short-circuit, and only if the output signal indicates an open state, the corresponding circuit part being open, the same second switch 544a, 544b, 544c is activated. The first switches 542a, 542b, 542c can for example be break contact switch(es) and/or a make contact switch(es). For example, each of the first switches 542a, 542b, 542c can be a break contact switch, or each of the first switches 542a, 542b, 542c can be a make contact switch(es). For example, each of the second switches 544a, 544b, 544c can be a break contact switch, or each of the first switches 544a, 544b, 544c can be a make contact switch. For example, each of the first switches 542a, 542b, 542c can be a break contact switch, and each of the second switches 544a, 544b, 544c can be a make contact switch. For example, each of the first switches 542a, 542b, 542c can be a make contact switch, and each of the second switches 544a, 544b, 544c can be a break contact switch.

The electronic switch subassembly 5 comprises a first electrical subcircuit 562 connecting the first switches 542a, 542b, 542c together. The electronic switch subassembly 5 comprises a second electrical subcircuit 564 connecting the second switch elements 544a, 544b, 544c together. The first electrical subcircuit 562 being distinct from the second electrical subcircuit 564. This allows for further reduction of the risks of false activation of the subassembly, by strictly separating the functioning of the first switches and of the second switches.

For instance, the first electrical subcircuit 562 and second electrical subcircuit 564 are not electrically connected in the subassembly.

The switch subassembly 5 can comprise exactly the three switch elements 54a, 54b, 54c, each comprising the one or more switch(es) 542a, 542b, 542c, 544a, 544b, 544c, the exactly three switch elements 54a, 54b, 54c, being arranged at different positions along the transverse direction so that a user's touch on the switch contact area 522 activates at least one of the switches 54a, 54b, 54c. This number of switch elements 54a, 54b, 54c, allows optimizing the result of having a switch contact area 522, which has a size dimensioned with respect to a human's hand, fully sensitive while limiting the number of components, and thus simplifying the fabrication and associated costs.

### Light source

The electronic switch subassembly 5 comprises a light source 58. The light source 58 is arranged to light the switch contact area 522 and/or the path to be followed by the user's hand to reach the switch contact area 522 when the subassembly 5 is assembled to the vehicle door 2. For example, the light sources 58 is arranged to light the inner wall part 12 of the cover member 8.

The light source 58 can comprise or be one or several light-emitting diode(s).

### Paddle

The subassembly 5 comprises a paddle 52. The paddle 52 comprises the switch contact area 522.

The paddle comprises, for each switch element 54a, 54b, 54c, a corresponding contact subcircuit 524a, 524b, 524c allowing activation of the one or more switch(es) of the switch element by a user's touch on the switch contact area 522, for instance on a corresponding part of the switch contact area 522. The contact subcircuits 524a, 524b, 524c extend on an inner face 526 of the paddle 52 configured to face the switch elements 54a, 54b, 54c, for instance facing the printed circuit board subassembly 56 described hereafter. The inner face 526 of the paddle 52 faces the inner space of the subassembly 5 as described hereafter. The paddle 52 presents an outer face 527, for instance opposite the inner face 526, destined to be touched by the user, for instance facing away from the printed circuit board subassembly 56 described hereafter.

For example, the paddle comprises, for the first switch element 54a, a corresponding first contact subcircuit 524a allowing activation of the first first switch 542a and/or of the first second switch 544a by a user's touch on the switch contact area 522. For example, the paddle comprises, for the second switch element 54b, a corresponding second contact subcircuit 524b allowing activation of the second first switch 542b and/or of the second second switch 544b by a user's touch on the switch contact area 522. For example, the paddle comprises, for the third switch element 54c, a corresponding third contact subcircuit 524c allowing activation of the third first switch 542c and/or of the third second switch 544c by a user's touch on the switch contact area 522.

The paddle 52 comprises at least a window part 528 that is at least partially transparent, for example transparent, to the light emitted by the light source 58, for example so as to light the path followed by the user's hand to reach the switch contact area 522 when the subassembly 5 is assembled to the vehicle door 2. The window part 528 can extend from the inner face 526 to the outer face 527 so as to allow the light from the light source 58 to pass through the paddle 52.

The window part 528 is for example located downstream the switch contact area 522 with respect to the course followed by the user's hand so as to reach the switch contact area 522. In other words, the window part 528 is for example located beyond the path followed by the user's hand so as to reach the switch contact area 522. The window part 528 is for example located in an upper part of the paddle 52. The switch contact area 522 is for example located in a lower part of the paddle 52. This allows for the light source 58 to efficiently light the path to the switch contact area 522, and to limit the dirt that could be brought, among others by the user's hand, to the window part 528 and which may reduce the light passing through.

The paddle 52 can comprise a frame 521. The frame 521 comprises the inner face 526. The frame 521 can thus comprise a central wall having a side forming the inner face 526, the other side of the central wall extending opposite the inner face 526, for instance facing away from the printed circuit board subassembly 56 described hereafter. The frame can comprise surrounding walls extending from the periphery of the central wall. The frame 521 can be a rigid frame.

The switch contact area 522 is for instance overmolded, or obtained by overmolding, for example over the frame 521 for instance over the central wall so as to be surrounded by the peripheral walls. This allows for a tight connection between the inner face 526 and the switch contact area522 and therefore limit the stroke to give a touch feeling, so as to limit the feeling of the stroke by the user.

The paddle 52 or the switch contact area 522 can comprise or be made of elastic material(s), for example rubber. This also allows for a tight connection to the switch elements and therefore limit the stroke to give a touch feeling, so as to limit the feeling of the stroke by the user. The combination of the material(s) and of the manufacturing by overmolding further increases this result.

### Printed circuit board assembly

The subassembly 5 comprises a printed circuit board subassembly 56. The printed circuit board subassembly 56 comprises the at least two switch elements, for example the at least three switch elements 54a, 54b, 54c. The printed circuit board subassembly 56 comprises the first electrical subcircuit 562 and the second electrical subcircuit 564. The printed circuit board subassembly 56 comprises the light source 58.

The printed circuit board assembly comprises a printed circuit board 566. The printed circuit board 566 comprises the first electrical subcircuit 562 and the second electrical subcircuit 564, for instance the first electrical subcircuit 562 and the second electrical subcircuit 564 forming parts of the printed circuit(s) of the printed circuit board 566. The printed circuit board 566 presents the at least two switch elements, for example the at least three switch elements 54a, 54b, 54c, and/or the light source 58, the at least three switch elements 54a, 54b, 54c and/or the light source 58 being electrically connected to the printed circuit(s) of the printed circuit board 566, for instance by welding.

The printed circuit board subassembly 56, for instance the printed circuit board 566, comprise an inner face 567 and an outer face 568. The inner face 567 and the outer face 568 are opposite faces. The outer face 568 faces the paddle 52. The inner face 567 can present the first electrical subcircuit 562 and the second electrical subcircuit 564 at its surface. The outer face 568 can present the at least two switch elements, for example the at least three switch elements 54a, 54b, 54c, and/or the light source 58 at its surface.

### Housing

The subassembly 5 comprises a housing. The housing is configured to cooperate with the paddle 52, for instance so as to define an inner space 531 wherein the printed circuit board subassembly 56 is arranged.

The housing is configured to be attached, for example secured to the body 44 of the bracket 4.

The housing comprises a casing part. The casing part can comprise a support face 5321 configured to support and/or face the printed circuit board subassembly 56, for instance the inner face 567 of the printed circuit board subassembly 56. The casing part can comprise lateral walls 5322 and 5323 extending laterally on both sides of the printed circuit board subassembly 56 and/or of the paddle 52. The casing part can comprise one or two arms 5324 and 5325, for instance lateral arms, for instance extending from the lateral walls 5322 and 5323. The arms 5324 and 5325 are configured to enable attachment of the subassembly 5 to the body 44 of the bracket 4, for instance through dedicated apertures of the bracket 4, the arms forming for examples hooks configured to be maintained through said apertures. The casing part can comprise an upper wall 5326. The upper wall can extend above and beyond the printed circuit board subassembly 56 and/or of the paddle 52, so as to form a support area configured to be positioned on the body 44 of the bracket 4 and attached, for instance secured to the body 44 of the bracket 4, for instance by means of screws extending through holes 53261 and 53262 of the the upper wall 5326.

The contact zone 5352 between the housing and the paddle 52 is sealed, for example by laser welding, to form a waterproof seal. This allows for a protection of the printed circuit board subassembly 56.

### Electrical connection means

The electronic switch subassembly 5 can comprise electrical connection means 57 for electrically connecting the printed circuit board assembly 56 to the electrical latch. The housing has an opening 534 through which the electrical connection means extend out of the inner space 531. The opening 534 is sealed by potting to form a waterproof seal. This allows for a protection of the printed circuit board subassembly 56. In combination with the above mentioned laser welding, the potting further increase the waterproofing of the inner space 531 and resulting protection of the printed circuit board subassembly 56.

The electrical connection means 57 comprise one or several electrical wire(s), for example a cable surrounding the wire(s), the electrical wire(s) being provided with connections at their both ends.

### System

A system can comprise such an assembly 1 and the corresponding vehicle door 2. The assembly 1 is assembled to the vehicle door 2. The assembly 1 can further comprise the vehicle including the vehicle door 2 mounted thereon.

### Method for opening

A method for opening a vehicle door 2 by means of the assembly 1 is described. The method comprises the activation of the at least one electronic switch subassembly 5 by a user's touch so as to send a signal to an electronic latch to open the door 2. The activation of the at least one electronic switch subassembly 5 comprises, in response to a user's touch on the switch contact area 522, a step of activation of at least one of the switches 542a, 542b, 542c, 544a, 544b, 544c, for instance as described hereabove.

The signal to an electronic latch to open the door 2 can also comprise a signal to unlock the door 2.

### Method for obtaining a subassembly

A method for obtaining the subassembly 5 is described. The method comprises assembling the housing 53, the paddle 52 and the printed circuit board assembly 56. The method can comprise the sealing of the contact zone 5352 between the housing and the paddle 52, for example by laser welding, to form a waterproof seal. The method can comprise the sealing of the opening 534 by potting to form a waterproof seal.

### Method for mounting

A method for mounting the assembly on a vehicle door is described. The method comprises a first step of assembling the bracket 4 to an inner side of the vehicle door 2.

The method comprises a second step of connecting the first connector part 146 and the second connector part 46.

The method comprises a third step of assembling the cover member 8 to an external side of the vehicle door 2.

The second step can be performed after the first step, and the third step can be performed after the second step. That way

The second connector part 46 can remain secured to the bracket 4 at least during the mounting of the assembly on the vehicle door 2, for example during the first step and the second step and the third step.

The method can further comprise a fourth step of securing the cover member 8 to the bracket 4, the fourth step being performed after the third step. The fourth step of securing can comprise clipping the cover member 8 to the bracket 4. The fourth step of securing can comprise, for example after clipping, locking the cover member 8 on the bracket 4 by sliding a locking element of the bracket 4. The clipping can comprise inserting the clipping means 18 of the cover member 8 through at least one aperture of the bracket 4, the locking resulting from the locking element 48 being positioned at least partially between the clipped clipping means 18 and the aperture.

## Claims

1. Electronic switch subassembly to be assembled to an inner side of a vehicle door (2), the switch subassembly (5) being configured to be activated by a user's touch so as to send a signal to an electronic latch to open the door (2), the switch subassembly (5) comprising:
- a switch contact area (522) extending across a transverse direction with respect to the path to be followed by the user's hand to reach the switch contact area when the subassembly is assembled to the vehicle door (2), and
- at least two switch elements (54a, 54b, 54c), each switch element (54a, 54b, 54c) comprising one or more switch(es) (542a, 542b, 542c, 544a, 544b, 544c), the switch elements being arranged at different positions along the transverse direction so that a user's touch on the switch contact area (522) activates at least one of the switches.

2. The electronic switch subassembly of claim 1, wherein each switch element (54a, 54b, 54c) comprises a first switch (542a, 542b, 542c) and a second switch (544a, 544b, 544c), the switch subassembly being activated when:
- at least one of the first switches (542a, 542b, 542c) is activated and
- at least one of the second switches (544a, 544b, 544c) is activated.

3. The electronic switch subassembly of the preceding claim, wherein the first switches (542a, 542b, 542c) and the second switches (544a, 544b, 544c) are configured such that the output signal sent by of each of the output signals of the first switches (542a, 542b, 542c) when activated is inverted with respect to the output signal sent by each of the second switches (544a, 544b, 544c) when activated.

4. The electronic switch subassembly of claim 2 or 3, comprising a first electrical subcircuit (562) connecting the first switches (542a, 542b, 542c) together, and a second electrical subcircuit (564) connecting the second switch elements (544a, 544b, 544c) together, the first electrical subcircuit (562) being distinct from the second electrical subcircuit (564).

5. The electronic switch subassembly of any of the preceding claims, comprising at least three of the switch elements.

6. The electronic switch subassembly of any of the preceding claims, comprising a light source (58) arranged to light the path to be followed by the user's hand to reach the switch contact area (522) when the subassembly (5) is assembled to the vehicle door (2).

7. The electronic switch subassembly of any of the preceding claims, comprising a paddle (52) comprising the switch contact area (522), the paddle comprising for each switch element (54a, 54b, 54c), a corresponding contact subcircuit (524a, 524b, 524c) allowing activation of the one or more switch(es) of the switch element (54a, 54b, 54c) by a user's touch on the switch contact area (522).

8. The electronic switch subassembly of claims 6 and 7, wherein the paddle (52) comprises at least a part that is at least partially transparent to the light emitted by the light source (58), so as to light the path followed by the user's hand to reach the switch contact area (522) when the subassembly is assembled to the vehicle door (2).

9. The electronic switch subassembly of any of the preceding claims, comprising a printed circuit board assembly (56) comprising the at least two switch elements (54a, 54b, 54c), for example comprising the first electrical subcircuit (562) and the second electrical subcircuit (564) and/or for example comprising the light source (58), for example the switch contact area (522) being obtained by overmolding.

10. The electronic switch subassembly of claim 7 or 8, in combination with claim 9, comprising a housing (53) configured to cooperate with the paddle (52) so as to define an inner space (531) wherein the printed circuit board assembly (56) is arranged.

11. The electronic switch subassembly of claim 10, wherein a contact zone (5352) between the housing (53) and the paddle (52) is sealed by laser welding to form a waterproof seal.

12. The electronic switch subassembly of claim 10 or 11, comprising electrical connection means (57) for electrically connecting the printed circuit board assembly (56) to the electrical latch, the housing (53) having an opening (534) through which the electrical connection means extend out of the inner space (531), the opening (534) being sealed by potting to form a waterproof seal.

13. Bracket to be assembled to an inner side of a vehicle door (2), the bracket (4) comprising:
- the electronic switch subassembly (5) of any of the preceding claims, and
- a body (44) to which the subassembly (5) is attached.

14. Assembly for opening and/or closing a vehicle door, the assembly (1) comprising:
- a bracket (4) according to the preceding claim,
- a cover member (8) configured to be attached to the bracket (4), the cover member (8) comprising:
∘ a frame part (10), and
∘ an inner wall part (12) extending from the frame part (10) so as to allow an access by the user's hand to the at least one electronic switch subassembly (5) of the bracket (4).

15. Method for opening a vehicle door (2) by means of the assembly (1) of the preceding claim, comprising the activation of the at least one electronic switch subassembly (5) by a user's touch so as to send a signal to an electronic latch to open the door (2), the activation of the at least one electronic switch subassembly (5) comprising, in response to a user's touch on the switch contact area (522), a step of activation of at least one of the switches (542a, 542b, 542c, 544a, 544b, 544c).
